# EUROPEAN PATENT APPLICATION

(11) **EP 1 533 714 A2**
(43) Date of publication of application: **25.05.2005**
(21) Application number: 04026849.2
(22) Date of filing: 11.11.2004
(51) Int. Cl.: G06F 17/30

(54) **Multimedia diary application for use with a digital device**

(30) Priority: 17.11.2003 US 715187; 03.03.2004 US 792175
(71) Applicant: Nokia Corporation, 02150 Espoo (FI)
(72) Inventor: Finke-Anlauff, Andrea, 38104 Braunschweig (DE); Myka, Andreas, 004000 Helsinki (FI); Huhtela-Bremer, Laura, 02600 Espoo (FI); Jung, Younghee, 00180 Helsinki (FI); Schybergson, Olof, London EC1V 7EH (GB); Macke, Annika, 38104 Braunschweig (DE); Metsätähti, Vesa, 00170 Helsinki (FI); Hakari, Tomi, 04130 Sipoo (FI); Lindholm, Christian, 00150 Helsinki (FI); Oksanen, Olli, 00100 Helsinki (FI)
(74) Representative: Kurig, Thomas, Dr.

(57) **Abstract**

A media diary application implemented in a digital communication device. The media diary combines the benefit of an electronic calendar planner with a digital media file manager that organizes media by timeframe. The media diary provides for a calendar view of calendared events and reminders and a media view of media items associated with a past calendared event or date. The media diary may also provide for a timeline view that combines both the calendar view and media view into a composite view that incorporates a timeline. In an alternate embodiment, the media diary may be defined by a media view in combination with a time line view.

## Description

### FIELD OF THE INVENTION

The present invention relates to digital communication and, more specifically, to an application for providing digital communication devices with a media diary that calendars events and associates digital media items with calendar views.

### BACKGROUND OF THE INVENTION

The rapid growth of digital communication has made it possible for all kinds of digital media items to be communicated amongst various types of wireless and wire line communication devices. For instance, the cellular or mobile telephone is no longer limited to telephonic voice communication and may include other means of digital communication, such as digital networking (i.e., Internet communication, text messaging, and the like). In addition, an increasing number of cellular telephones and other mobile wireless communication devices, such as portable computers, personal data assistants (PDAs) and the like, are being integrated with other means of capturing or producing digital media, such as digital cameras, digital audio recorders, digital video recorders and the like. Technological advances have made it possible for other digital devices, such as digital cameras, digital video recorders, digital audio devices and the like to be equipped with means for digital communication. As more and more digital devices possess the capability to digitally communicate with one another, the amount of digital media items that will be communicated amongst these devices will increase at an alarming rate.

In addition to the onset of more and more digital devices possessing digital communication capabilities, the digital storage capacity of these devices is constantly increasing. In the near future the majority of mobile digital communication terminals may well be equipped with storage capacity in the gigabyte range or greater, allowing these devices to store an enormous amount of digital data. In this environment it will no longer be prohibitive from a memory capacity standpoint to store a voluminous amount of large file types, such as video, audio or other multimedia files.

In the digital communication environment where more and more digital devices, both wireless and wired, are equipped with a means for digital communication and where the storage capacity of these devices has become seemingly endless, the digital communication device will encounter and store innumerable digital media files. As such, the digital communication device will desire a means to access, store, manage and further communicate these digital files in an efficient and user-friendly environment.

For example, if a digital communication device receives a digital media file the user of the device would benefit greatly from an application that automatically places the file into a readily accessible storage area and where managing and accessing of the file in the future can occur efficiently, without the user having to spend a great deal of time searching for the media file.

Most digital communication devices, such as desktop or laptop computers, personal data assistants (PDAs) or the like either come equipped or can be configured by the user to implement a daily planner application. The daily planner allows the user coordinate and manage their upcoming schedule of events by inputting event reminders in a digital calendar. The digital planner provides the unique benefit of sending the user electronic reminders, in the form of alarms or visual or audible messages, when an upcoming event is pending. The digital planner has proven to be a highly successful tool for the businessperson and, in most instances, has replaced the need for conventional hard copy or paper daily planers.

Most digital media files can be easily categorized and stored according to a calendar date. For example, a wedding video can be categorized according to the date of the wedding and photographs taken at a party can be categorized according to the date of the party. These are examples of categorizing the media file based on the creation date of the media file. In other instances the media file can be associated with the date on which the media file is used or presented or the date on which the recipient receives the file. For example, a multimedia presentation for a business meeting may be categorized according to the date of the presentation and a personal text file from a friend may be categorized according to the date received.

Therefore, the need exists to develop a media file organizing application for a digital communication device that will incorporate both a daily planner and storage of media files according to an associated date. In order to provide the necessary organization to the user, the media file organizing application should be capable of automatically entering received media files into the application and automatically or manually associating the media files with a specific date. In order to provide the necessary efficiency to the user, the application should be highly searchable so that media files can be readily accessed by the user. In addition, a desired media file organizing application will possess the capability to easily further disseminate the media files to other digital communication devices.

### BRIEF SUMMARY OF THE INVENTION

The present invention provides for a media diary application implemented in a digital communication device. The media diary combines the benefit of an electronic calendar planner with a digital media file manager that organizes media by timeframe. The media diary provides for a calendar view of calendared events and reminders and a media view of media items associated with a past calendared event or date. The media diary may also provide for a timeline view that combines both the calendar view and media view into a composite view that incorporates a timeline view. In an alternate embodiment, the media diary may be defined by a media view in combination with a timeline view.

In one embodiment of the invention, an application for representing media files on a digital device is defined. The application comprises a computer readable storage medium having computer-readable program instructions embodied in the medium. The computer-readable program instructions includes first instructions for generating a calendar view that represents time in calendar format and associates events with respective to moments or periods of time and second instructions for generating a media view that provides access to digital media files and associates digital media files with a moment or period of time or an event. Additionally, the application may include the function of first and second instructions operating concurrently to generate a timeline view that combines the calendar view and the media view. In typical embodiments of the application third instructions will be provide the capability to search the calendar view and the media view in terms of time period. Typically the calendar view provides the user with access to future calendared events and the media view provides the user with access to media files associated with a past event or period of time.

Additional application features may be provided by the instructions. For example, the first instructions may generate a dynamic indicator for the current period of time and the first instructions may provide for delineation between past time and future time. The second instructions may associate digital media files with a period of time based upon information associated with the digital media file, such as metadata. The first and second instructions may operate concurrently to correlate, combine and/or store metadata information of the media file and the calendar event. The first and second instructions may operate concurrently to create and display a title for a group of media files, with the grouping and/or title being based on similar metadata information. The group may be created automatically by the media diary application or by at the request of the user.

The invention is additionally embodied in various methods for digital media management in a digital device. One method includes the steps of receiving a digital media file having metadata associated with the digital media file and providing a user access to the digital media file via a media view that displays a representation of the digital media item in connection with a time element of the metadata. Typically, the metadata will be inputted in the media file during creation of the media file, either automatically by the device itself or manually by the user. The file may be automatically transmitted to the media diary application upon receipt, such that the user of the diary does not need to manually import the files from other applications. The user is provided access to the media files via a media view in the media diary that associates the file with a period of time. Additionally, the user may be provided with a timeline view within the media diary that combines a timeline with the media view and a calendar view of calendared events.

A further method for digital media management in a digital device includes the steps of storing information related to a calendar event in an event file, receiving a digital media file associated with the calendar event, correlating the digital media file with the information in the event file; and creating an accessible representation of the digital media file and at least a portion of the correlated information in the event file. This method provides correlation between a received media file and a calendar event, such that, once correlation is provided, the media item is represented in the media diary along with at least a portion of the correlated data.

The invention defines a further method for defining media file representation in a media view of a media diary application. The method includes the steps of receiving a media file having associated metadata information, correlating the metadata information with calendar event information, determining the manner in which the media file will be represented in a media view of the media diary, and presenting the media file as a media file representation in the media view in accordance with the correlation procedure and the determination of the manner of representation. Determining the manner in which the media file will be represented in a media view may entail determining the representation icon, determining the size of the date column within the media view and/or determining the size of the media view in the overall media diary layout.

Yet another embodiment of the invention is defined by a method for digital media management in a digital device that includes the steps of receiving a digital media file having metadata associated with the digital media file, transmitting the file, automatically, to a media diary application that associates the file with a period of time and providing a user access to the digital media file via a media view that displays a representation of the digital media file in connection with a period of time. The method may also include the step of correlating the metadata in the digital media file with calendar event information prior to providing a user access to the media file via a media view.

A further embodiment of the invention is defined by a digital device having a processing unit that executes computer-readable program instructions for accessing media files. The computer-readable program instructions include first instructions for generating a calendar view that represents time in calendar format and associates events with respective periods of time, and second instructions for generating a media view that provides access to digital media files and associates digital media files with a period of time. Additionally, the digital device will include a display in communication with the processing unit that presents the user access to media files through the calendar view and the media view.

Thus, the present invention provides a useful tool in managing media files in a digital device. The media diary will store files by associating the files with an event or a period of time and provide the user with access to a media view that displays the files in association with the event or period of time. The scrollable nature of the timeline view provides the user with ready access to the stored media files. With more and more digital devices either having the capability to create media files or communicate media files and the storage capacity of such devices increasing dramatically, the present invention addresses the need that exists for a media management application that will provide the user with easy access to an unlimited number of media files.

### BRIEF DESCRIPTION OF THE DRAWINGS

Having thus described the invention in general terms, reference will now be made to the accompanying drawings, which are not necessarily drawn to scale, and wherein:
Figure 1 is an illustration of a calendar view or calendar window as displayed by the media diary, in accordance with an embodiment of the present invention.
Figure 2 is an illustration of a media view or media window as displayed by the media diary, in accordance with an embodiment of the present invention.
Figure 3 is an illustration of a timeline view in combination with a calendar view and media view, in accordance with an embodiment of the present invention.
Figure 4 is an illustration of a timeline view in combination with a calendar view and media view that accommodates a current day view, in accordance with an embodiment of the present invention.
Figure 5 is an illustration of a timeline view in combination with a media view, in accordance with an embodiment of the present invention.
Figure 6 is a block diagram of a digital device implementing a media diary, in accordance with an embodiment of the present invention.
Figure 7 is a flow diagram of a method for digital media management in a digital device, in accordance with an embodiment of the present invention.
Figure 8 is a flow diagram of a method for digital media management in a digital device, in accordance with an embodiment of the present invention.
Figure 9 is a flow diagram of a method for defining digital media file representation in a media view of a media diary, in accordance with an embodiment of the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

The present invention provides for a media diary application implemented in an electronic device, such as a digital communication device. The media diary combines the benefit of an electronic calendar planner with a digital media item organizer that organizes media by timeframe and/or by timeline. The media diary provides for a calendar view of calendared events and reminders and a media view of media items associated with a past calendared event or date. The media diary may also provide for a timeline view that combines both the calendar view and media view into a composite view that incorporates a timeline presentation, herein also referred to as a time bar. In an alternate embodiment, the timeline view of the media diary may be defined by a media view in combination with a timeline presentation.

In a further embodiment the media diary provides for a calendar view of calendared events and reminders, and a media view of media items associated with a past moment of time, such as year, month, week, day, hour, a specific time, or period of time of the calendared events or reminders. Alternatively, the media diary provides for a calendar view of calendared events and reminders and a media view of media items associated with any portion of the metadata information of the past calendared events or reminders. Alternatively, the media diary provides for a media view of media items that are associated with a past moment of time, such as year, month, week, day, hour, a specific time, or period of time based on a timestamp in the media file, without having noted an event related to the media file, in advance, in the calendar view or application.

In an alternate embodiment the media diary combines the benefit of an electronic calendar planner and digital media item organizer with an electronic mail (email) system and application. In an alternate embodiment the media diary combines the benefit of an electronic calendar planner and digital media item organizer with a media presentation application.

The media diary application of the present invention may be implemented and executed on any electronic device that incorporates a display, such as a desktop or portable computer, cellular telephone, personal data assistant (PDA), digital camera, digital camcorder, e-book device, television, digital audio player or the like. In addition the media diary application may be implemented on electronic devices that are connected to an external display, such as a set-top box (STB), personal video recorder (PVR), digital video recorder (DVR) or the like. While in most implementations the digital device that executes the media diary application will be capable of any type of wireless or wireline network communication, such as wireless telecom, short range radio network, Bluetooth®, Wireless Local Area Network (WLAN), Radio Frequency Identification (RFID), Internet Protocol Data Casting (IPDC), Digital Video Broadcasting (DVB), Infrared Data Association (IrDa), Internet or the like, it is not required that the digital device be adapted to communicate via network. Devices that are capable of requiring digital media files internally or may access media files through memory devices (e.g., flash storage device, memory sticks, video and audio storage tapes, CD, DVD, removable hard disc device (HDD) and the like) are also applicable.

In accordance with an embodiment of the present invention, the media diary application will be embodied by a computer-readable storage medium having computer-readable program instructions stored in the medium. The storage medium will typically be a memory device, such as flash ROM memory, HDD or the like. The programming instructions may be written in a standard computer programming language, such as C++, Java or the like. Upon execution by a processing unit as described below, the program instructions will implement the various functions of the media diary application as described below. The computer-readable program instructions include first instructions that will generate a calendar view that represents time in calendar format and associates events with respective time information, such as moment or periods of time. The computer-readable program instructions also includes second instructions that will generate a media view that provides access to digital media files and associates digital media files with time information, such as a moment or period of time. In an alternate embodiment, the first and second instructions operate concurrently to generate a timeline view that combines the calendar view and the media view with an associated timeline, i.e., time bar, presentation. While the first and second instructions may be modules, objects or the like that communicate with one another, the first and second instructions need not be discrete or separable portions of the program instructions and may be interspersed throughout if so desired.

Typically, the media diary of the present invention will be an individual media diary associated with the user of the device. This is particularly the case when the device that implements the diary is typically personal in nature, such as a cellular telephone, PDA or the like. However, the media diary of the present invention may also provide for a multiple-user media diary, in which, the diary is set-up for multiple users to access the diary, typically with access controlled by individual user identification and passwords. For example, a media diary may be a family media diary implemented on a home computer or on a server in a network environment with each member of the family having individual access. In the multiple-user mode, certain media file content and calendar information may be generic amongst all users, while other media files and calendar information may be designated as user-specific. The multiple-user embodiments are typically associated with implementation on general, non-user specific devices, such as a home computer, digital camera or digital camcorder. In addition, a multiple user embodiment may be defined by a media diary that is implemented on a public server, e.g., Internet server, and users have Internet or some network-based access to the common media diary application. In this instance certain media files and calendar events may be designated as common to all of the users of the application and other information may be designated as user specific information.

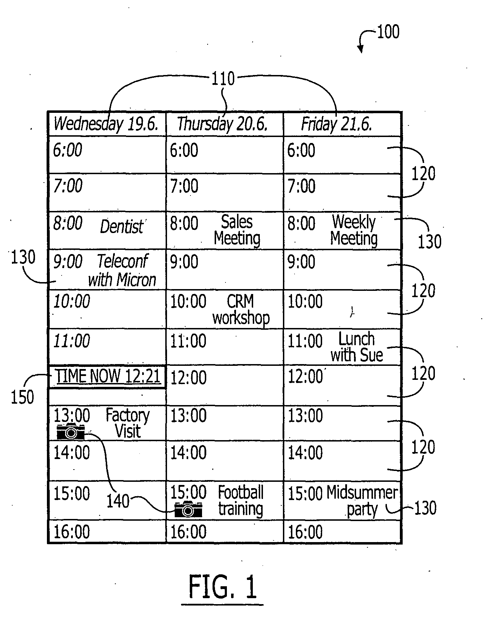

Figure 1 illustrates an example of a calendar view 100 that provides for the entry of calendar events or reminders and provides the user with a daily planner application, in accordance with an embodiment of the present invention. The calendar view will be generated by first computer-readable program instructions implemented in association with a digital device. It is noted that the calendar view herein depicted and described is by way of example only; other calendar views that provide for the display of calendar events or reminders are also contemplated and within the inventive concepts herein disclosed. Alternatively, the calendar view may be generated by another calendar or personal planner application, in which case, the calendar view is imported into the media diary application from the auxiliary calendar application.

The calendar view includes date columns **110**, which correspond to a specific date. In the example shown, three date columns are visible on the display corresponding to the current date (i.e., Wednesday, 19 June) and the subsequent two dates. Typically, upon activation of the calendar view the current date will be displayed in the left-hand column of the calendar view with columns for the subsequent dates positioned sequentially to the right. As will be apparent, the calendar view may be differently oriented, such as with rows as opposed to columns or the current date may be displayed in the right hand column, if so desired. In an alternate embodiment the calendar view may include columns **110**, which may correspond to any moment of time, such as year, month, day, hour or the like. Additionally upon activation of the calendar view the current moment of time may be displayed on the middle of the view.

The date columns **110** include multiple time blocks **120**, which provide a descriptive area for information related to calendar events **130**. In the embodiment shown, the time blocks correspond to one-hour time blocks, although the blocks may be for other lengths of time, such as 30-minute blocks. Further, for example if a column represents a year, the time block **120** may represent a month. The calendar view will be vertically scrollable, so that, all of the time blocks for a date column will be viewable by the user. In addition, the calendar view will typically be horizontally scrollable to provide for a view of other date or time columns **110.** In addition, the time blocks may include reminder icons **140**, which provide the media diary user a visual reminder related to an upcoming calendar event. For example in the depicted embodiment, the camera icon reminds the user that calendared event requires or will benefit from a having a camera on-hand.

The information related to calendar events **130** will typically be inputted by the user and include information, such as title of the event, topic of the event, date and time of the event, location of the event, individuals attending the event and the like. A calendar event may be inputted by activating, via keystroke or mouse-type input signal, the time block associated with the event. Upon activation, a window or view is made visible that allows for the user to input information related to the event. Once the calendar event has been inputted and text displayed in the time block, the details of the calendar events may be accessible by activating, via keystroke or mouse-type input signal, the calendar event. In addition to manually inputting calendar events, the media diary may import calendar events from other sources or applications that are being executed on the digital device, such as from other, internal or external, personal planner or calendar applications, email systems or the like. Further, the information related to a calendar event **130** creates metadata information related to the calendar event or reminder.

The time blocks **120** may include a time now indicator **150** that may be accentuated in bold-faced type or other way graphically accentuated in the time block that includes the current time. The time now indicator serves to indicate the current moment of time. The time now indicator will be an active indicator that displays the current time, in hour and minutes, and moves forward to the next time block with the passage of time. In addition, the calendar view **100** may graphically distinguish between time blocks and calendar events that are in the past and time blocks and calendar events that are in the future. In the illustrated example, time blocks and events in the past are designated by italicized text and time blocks and events in the future are designated by non-italicized, standard text. As the time now indicator moves to the next time block to indicate the passage of time, the distinguishing graphics of the time blocks and calendar events will also change to indicate the proper time state.

In accordance with another aspect of the present invention, media diary or any portion of the media diary, such as the media view, the calendar view or the like may be synchronized with other media diary applications, calendar, personal planner or media presentation applications. The other media diary applications may be implemented on the same device as the original media diary application or they may be implemented on other devices. In this regard, the media diary application can import, either automatically or manually, media content, calendar events or reminders from other media diary, calendar or media presentation applications. Synchronization of the media content and/or calendar event information between remote devices may be accomplished by any known wireless or wired network communication technique, such as wireless telecom, short range radio network, Bluetooth®, WLAN, RFID, IPDC, DVB, IrDA, Internet or the like.

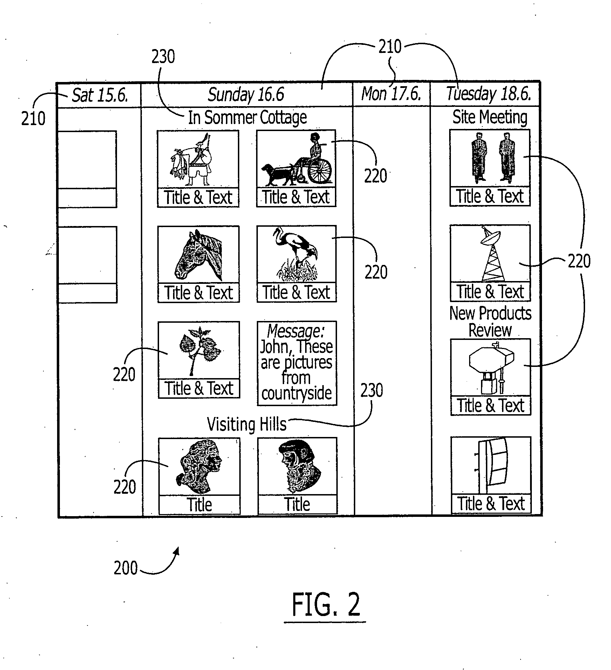

Figure 2 illustrates an example of a media view **200** that provides for digital media files, such as digital images, digital video, digital audio, computer games, computer software, digital text files or the like, to be accessible to the media diary user, in accordance with an embodiment of the present invention. Typically the media files that are represented in the media view will be associated to a past calendar event or past reminder. The media view will be generated by second computer-readable program instructions implemented in association with a digital device. It is noted that the media view herein depicted and described is by way of example only; other media views that provide for the display of media file representations in association with a moment of time or a time period are also contemplated and within the inventive concepts herein disclosed. Alternatively, the media files that are represented in the media view may be associated with a moment or period of time based on a timestamp in the media file, without having noted an event related to the media file, in advance, in the calendar view or application.

The media view of the illustrated embodiment includes date columns **210**, which correspond to a specific date, although the media view may be differently oriented if so desired. In the example shown, four date columns are visible on the display corresponding to the four previous dates. In an alternate embodiment the media view may include columns **210**, which may correspond to any moment of time, such as a year, a month, a week, a day, an hour or the like. The date columns will include media file representations **220** that are related to media files and are connected, in time, to the specific date, event and/or time. For example, the media file representations may include representations that provide the user with access to digital files, such as video files, image files, audio files, text files, emails, short message service (SMS) messages, multimedia message service (MMS) messages and the like and provide the user with information pertaining to the content of the files. The media file representations may include an icon, or a thumbnail image, a portion of the text of a text document or message or any other suitable media file representation with or without a title of the media file. The media files will typically be stored in a memory unit that is either located within the device that implements the media diary or is in communication with the device that implements the media diary. In instances in which the media files are stored within a memory unit located on the digital device implementing the media diary, the memory unit may be the same entity that stores the media diary operating instructions.

The form and style of the media file representations **220** may by user's preference or the form style may be automatically determined by the media diary application. I addition, the presentation and categorization of media file representations may be by user's preference or automatically determined by the media diary application.

Typically, the media diary will receive the media file from a digital recording function associated with the device or via digital communication from other devices. For example:
1) If the digital device is a cellular telephone that incorporates a digital camera or any other digital device that serves as a digital recording device, a digital media file (i.e., image) may be communicated directly via cellular telephone access from the camera/telephone device to the media diary in another device.
2) If the digital device is an independent digital camera or any other digital recording/storing/playing device and equipped with a wireless or wireline network connection the digital media file may be communicated directly from networked device to a media diary in another device.
3) If the digital device is an independent digital camera or any other digital recording/storing/playing device and equipped with short range digital communication means the digital media file may communicated first to a long range digital communication device (i.e. cellular telephone, a PDA, laptop or the like) that then passes the files to another device with a media diary. Alternatively, in proximity, a file transfer may occur directly to another device with a media diary.
4) The media files may be communicated by a physical memory unit / device transferred from one device to another device.

As such, the digital recording/storing/playing device from which the media file is communicated (i.e., the passing device) may include, and implement, the media diary application or may not include the media diary application. If the passing device includes the media diary application, the media files may be processed for media diary purposes prior to communication to other devices.

The communication /synchronization of the media files may be automatic after a creation of a new media file, or after a certain amount of media files have been created. Alternatively, the communication may occur at a selected time or on a request of a user and may include a single media file or a group of media files. Alternatively, the communication may occur at a specific location and/or via a specific network connection, e.g., at home via a Bluetooth connection. The communication/synchronization may occur via any wireless or wireline network communication method, such as for example via SMS, MMS or file transfer. The communication, i.e. synchronization, may also occur from a back end media diary application/device to any digital recording / storing / playing device with or without the media diary application.

The media file will typically have associated metadata, in the form of a timestamp, event name, file name, location information, people in the event or in the media file, objects in the media file, file type, file size, temperature, weather conditions or any other information. Additionally, the metadata may include information from any sensors installed in a media capturing, a media diary or any external device in communication to the media capturing or the media diary device. The media file metadata may be automatically inputted by the digital recording device at the time of the creation of the media file or may be manually inputted, such as at the time of creation of the media file or receipt or transfer of the media file. In addition, it is possible for the metadata to previously exist in conjunction with a calendar event in the media diary and to be associated with the digital media file at the moment the file is created, if the device creating the media file executes the media diary application.

Once the media diary receives the media file, the media file metadata is combined and/or correlated with the calendar event metadata information. The combined and/or correlated metadata information is associated and stored with the media file in the media diary, such that, when a user accesses the media file via the media file representation in the media view the user will be presented with the combined metadata and calendar event information. See for example, media file representations **220** of Figure 2, in which, a thumbnail image is combined with a title and text entry. Correlation of metadata information may occur if the comparison results in predetermined number of metadata fields in the media file metadata and the calendar event metadata being determined to be similar. Examples of correlated media file metadata and calendar event metadata include, event time in calendar event metadata and capture time of media file metadata and event name in calendar event metadata and event name in media file metadata.

Additionally, media files forming or related to a specific joint group, e.g. based on a specific event, time period or any other metadata, may be placed in the media view in a joint group **230** under a common title or subject. The media files within the joint group may be bordered, shaded, colored or otherwise graphically indicated to designate the media files as being within the joint group. The title or subject may be manually inputted or may be inherited from metadata related to a calendar event or reminder, or, alternatively, from any metadata information related to the media file. The group may be created automatically by the media diary application or by the request of a user.

In addition to displaying media file representations, the media view may also display past calendar events or reminders that do not have associated media files. The media diary application may be configured to automatically import calendar events and reminders from the calendar view portion of application to the media view portion of the application. In this regard, calendar events and reminders that are associated with a past period of time are displayed in the media view irrespective of their having associated media files. Alternately, the user of the media file may configure the media diary to allow for specific calendar events and reminders, as chosen by the user, to be displayed in the media view.

The media diary will typically incorporate a function that provides for ease in communicating a media file to another network communication device. For example, the media diary may include a send file function (not shown in Figure 2) that invokes an email application, SMS application, MMS application or other file transfer application. Media files are typically highlighted and added to the email, SMS or MMS as an attachment or otherwise communicated to the designated communication device.

The width of the date columns **210** in the media view **200** may dynamically and/or automatically vary based upon the number of media file representations in the column, size of the media file icons or thumbnails or the user's preference for formatting the media file representations. For example, if a first date column incorporates three times the number of media file representations as the second date column, then the first date column will likely be three times as wide as the second date column, i.e., the widths of the columns may be allocated in proportion to the number of media file representations within the respective column. Alternatively, the user may dictate or fix the width of a date column or the size of the thumbnail images may dictate the width of the date columns. In addition, the media view may be incorporated with a function that provides for condensing the media view to only those dates that have media files associated therewith.

The media view may also incorporate other functions that aid in finding data files within the media view. For example, the media view may include a condensed view function (not shown in Figure 2) that allows the user to condense the media file representations, such that the width of the date columns decreases and the amount of representations visible on the display increases. In addition, the media view may include a search function (not shown in Figure 2) that allows the user to search for a key word, moment of time or phrase that exists in the digital file metadata and/or the calendar event information file. The results of the search function provide access to only those media files associated with the searched word, time or phrase. In the same regard, the media view may include a filter function (not shown in Figure 2) that allows the user to filter the media that is shown according to media type, such as image files, video files, audio files, text files or the like or to filter by dates that incorporate media items.

Additionally, the media view may incorporate a note function (not shown in Figure 2) that allows the media diary user to add notes for a specific moment of time, such as a date and/or time. The note function will access a notepad that allows the user to write an appropriate note. The note will then be added to the media view on the specific media files, moment of time or period of time intended. It should apparent that the note function differs from text files that are received by the user via email, text messaging or some other form of digital communication, or from text documents, images or presentations created by the user of the device.

In addition, the media view may provide for a zoom function. The zoom function will allow the user of the media diary to zoom in or zoom out of the media view, as the application dictates. For example, zooming in on a particular portion of the media view will display the media file representations in greater detail; thus, providing the user better recognition of the media file that is being represented. Zooming out on a particular portion of the media view will display more media file representations; thus, providing the user insight into the overall quantity and type of media files that are associated with the time period displayed in the media view.

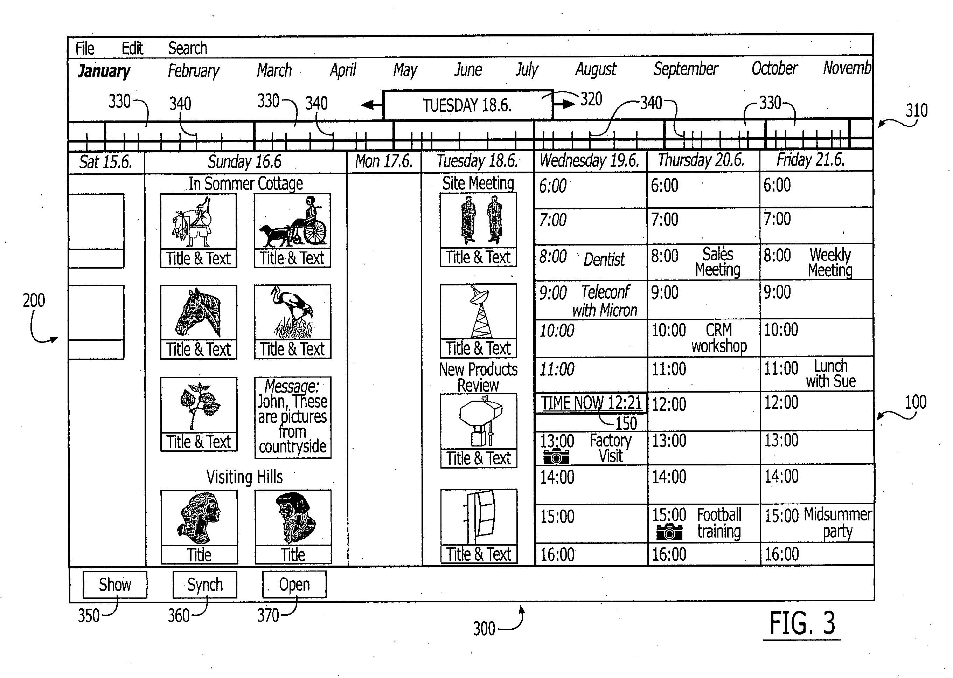

Figure 3 illustrates an example of a timeline view **300** which combines the calendar view **100** and the media view **200,** in accordance with an embodiment of the present invention. As depicted, the calendar view **100** is displayed on the right-hand side of the digital device's display, the media view **200** is displayed on the left-hand side of the display and the timeline view features are displayed above both the calendar view and the media view. The timeline view will be generated by the first and/or second computer-readable program instructions as implemented in association with a digital device. It is noted that the timeline view herein depicted and described is by way of example only; other timeline views that provide for the display of a timeline in combination with a media view and a calendar view are also contemplated and within the inventive concepts herein disclosed.

The timeline view **300** of the illustrated embodiment provides for a time bar **310** and a time handle **320.** The time handle allows the media diary to be scrolled forward in time and backward in time. As depicted, the calendar view **100** displays the current date, indicated by a current time indicator **150**, and the two subsequent dates, for example. The media view **200** displays the four previous dates, for example. The time handle is associated with the center most column, that is, in the depicted example, the column associated with the previous day, i.e. Tuesday 18, June. If the time handle is moved from the stationary position to the left, the calendar view, media view and, in some instances the time bar will scroll to the right, such that, more past dates in the media view will be scrolled and displayed. Moving the time handle to the left, such that more past dates in the media view are scrolled and displayed will eventually cause the calendar view to be scrolled out of the timeline view. If the time handle is moved from the stationary position to the right, the calendar view, the media view and, in some instances the time bar, will scroll to the left, such that, more future dates in the calendar view will be scrolled displayed. Moving the time handle to the right, such that more future dates in the calendar view are scrolled and displayed will eventually cause the media view to be scrolled out of the timeline view. The stationary position is usually in the centerline of the media diary display, or in the centerline of the time bar, or, alternatively, in the centerline of the media view. Alternatively, both media view and calendar view may have their own media handles (not shown in the figure), and they may be scrolled independently. For a more detailed description of the functionality of the time handle, see co-pending United States Patent Application No. , entitled, "Speed Browsing of Media Items in a Media Diary", filed on November 17, 2003, in the name of inventors Lindholm et al., and assigned to the same assignee as the present invention. That application is herein incorporated by reference as if setforth fully herein.

The time bar **310** allows the device user to focus in on specific dates. In the example shown, the bold cased blocks **330** may indicate weeks and the individual vertical lines **340** within the blocks may indicate ranges for specific dates on which media files currently exist. A space between the ranges indicates the amount of media files associated or stored on a specific date. Different days may be graphically altered, e.g. by different shading and/or color, to distinguish them from each other. For example, every second day may have dark shading and every third day may have light shading. Different weeks may also be graphically altered, e.g. by different shading and/or color, to distinguish them from each other.

Alternatively, shading or differently coloring within the time bar may indicate dates on which media files exist. For example, dark shading within the time bar may indicate that files exist on those dates, while light shading within the time bar may indicate that no files exist on those dates. In addition, the length of the shading may indicate the volume of media files that exist on a specific date. For example, lengthy shading that produces a relatively thick mark may indicate voluminous media files exist on the date, while a shaded hash mark may indicate that only one file exists on that date. For a more detailed description of the functionality of the time bar, see co-pending United States Patent Application No. , entitled, "Time Bar Navigation in Media Diary Application", filed on November 17, 2003, in the name of inventors Myka et al., and assigned to the same assignee as the present invention. That application is herein incorporated by reference as if setforth fully herein.

In addition, to the time bar and time handle features the timeline view may incorporate other functions. As shown, the timeline view may include a show key **350** that provides the user a presentation mode for a specified media file. For example, if a highlighted media file includes more than one image, engaging the show key will provide the user a slide show presentation of all the images in the file. Alternatively, the show key may provide a user a presentation mode for a specified media file or media files under a specific event or subject, or under a specific day or time period. The timeline view may include a synch key **360** that provides the digital device with a means of creating communication synchronization with other digital communication devices in the immediate area that implement a media diary application. The open key **370** provides for the selected or highlighted media file to be opened and displayed in detailed form, typically encompassing the entire display.

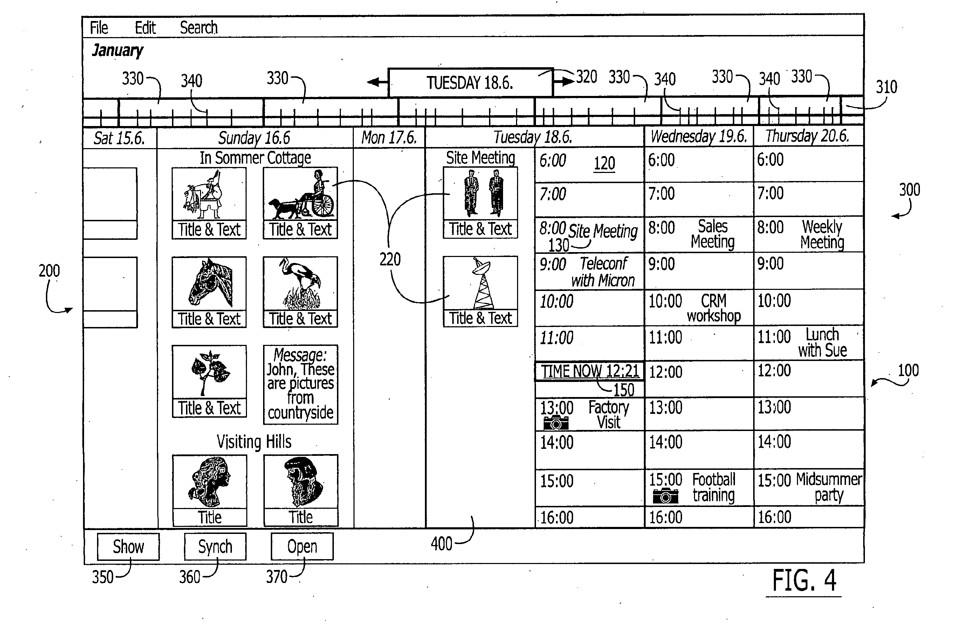

Figure 4 illustrates a timeline view **300** that combines the calendar view **100** and media view **200** and accommodates a current day view **400**, in accordance with an embodiment of the present invention. As depicted, the current day column provides for both the features of the calendar view and the media view within the context of the current date. In this regard, the current date column includes time blocks **120**, calendar event reminders **130,** a time now indicator **150** and media file representations **220**. In the Figure 4 example the media file representations are related to the site meeting that occurred in the 8:00 time block. Typically, the media file representations that are displayed in the current day view will correspond to events that have already occurred during the current day. However, it is also possible for the current day view to display media file representations related to events that will occur later in the current day, for example, a multimedia presentation that will be presented later in the current day may be displayed in the current day view.

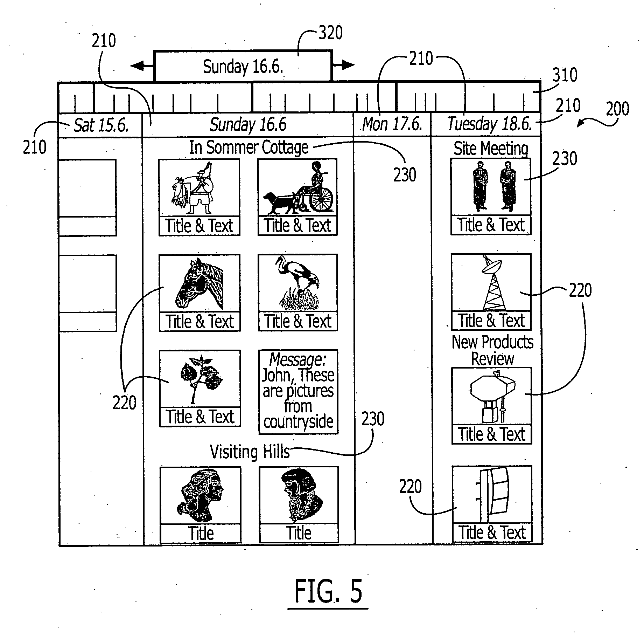

An additional embodiment of the invention may be defined by a media diary that includes a media view in combination with a time line view, but without a companion calendar view. In this embodiment, the first computer-readable program instructions will generate a media view that provides access to digital media files and associates digital media files with time information, such as a moment or a period of time. The first instructions will additionally generate a timeline, i.e., time bar, presentation with the media view. Figure 5 illustrates an example of a media view **200** incorporating the features of the timeline view, in accordance with an embodiment of the present invention. The media view includes date columns **210**, which correspond to a specific date. In the example shown, four date columns are visible on the display corresponding to four dates. The date columns will include media file representations **220** that are related to media files and are connected, in time, to the specific date. For example, the media file representations may include representations that provide the user with access to digital files, such as video files, image files, audio files text files and the like and provide the user with information pertaining to the content of the files. The media file representations may include an image and title of a digital image or video file, a portion of the text of a text message or any other suitable media file representation.

In this embodiment of the invention, the date columns may include both past dates, present dates and future dates. While most media files will be categorized in past date columns it is possible for media events to be categorized and displayed in future date columns. For example, a yet-to-be presented multimedia presentation can be categorized under a future date column.

The features of the timeline view may include a time bar **310** and a time handle **320**. The time handle can be moved to the left or right on the display to provide for scrolling of the dates within the media view. The time bar provides the ability to focus on a specific date range. In addition, in embodiments that incorporate a calendar view/application, the time handle will typically provide access to the calendar view by deviating the time handle to instantly scroll to the current date or any other date on the calendar.

The Figure 4 embodiment of the invention, which limits the invention to a media storage application that incorporates timeline association of media files, may be especially suited for portable devices, which desire a media diary application but are limited in terms of processing capabilities. In portable devices, such as PDAs, personal audio players, cellular telephones and the like, the media diary may be a scaled-down version that is limited to the media storage function (i.e., the media view), without incorporating a calendar / personal planner function (i.e., calendar view). In this embodiment of the media diary, receipt of media files into the media diary will not entail correlation of metadata with calendar event or reminder information. Other scaled down versions of the media diary are also contemplated and within the inventive concepts herein disclosed.

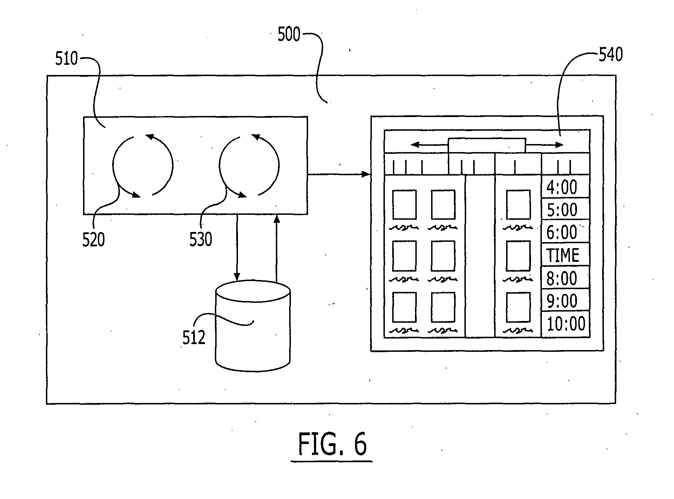

A further embodiment of the invention is defined by a digital device that implements the media diary, in accordance with an embodiment of the present invention. Figure 6 illustrates a block diagram of digital device **500** that implements the media diary. As previously noted, the digital device will typically be a digital device capable of digital communication with other digital devices, such as a mobile terminal including for example, a mobile telephone, a PDA, laptop computer or the like. However, the digital device may be any other device capable of displaying the media diary of the present invention such as a digital camera, digital video recorder, digital audio recorder or the like.

The digital device **500** will include a processing unit **510**, such as a processor, an application specific integrated circuit, analog and/or digital circuitry, or any other similar device that executes computer-readable program instructions for accessing media files. Wherein the program instructions and the media files are generally stored in memory device **512**. The computer-readable program instructions will include first instructions **520** for generating a calendar view that represents time in calendar format and associates events with respective periods of time, and second instructions **530** for generating a media view that provides access to digital media files and associates digital media files with a period of time. The first and second instructions may operate concurrently to generate a timeline view that combines the calendar view and the media view. In addition, the digital device will include, or may be in external communication with, a display **540** that is in communication with the processing unit and provides a presentation mechanism for the calendar view and the media view or the combined media view, calendar view and timeline view.

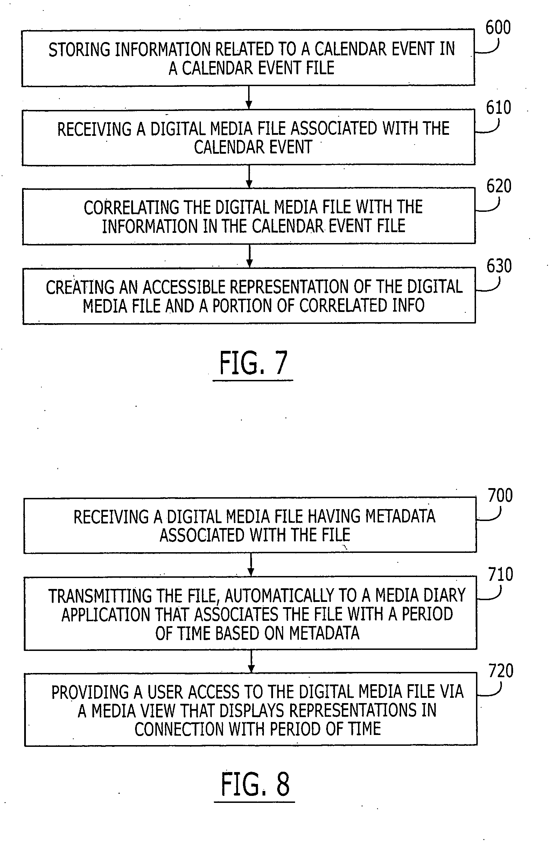

The present invention is also embodied in methods for digital media management in a digital device. Figure 7 presents a flow diagram of such a method, in accordance with an embodiment of the present invention. At step **600,** a user selects information related to a calendar event or a calendar reminder is stored in an event/reminder file. The information stored in the event file may include the name of the event, the date and time of the event, the topic of the event, location of the event, individuals attending the event and any other relevant event information. In the same regard, the information stored in a reminder file may include a reminder title, the date and time that the reminder needs to occur and any other relevant information.

At step **610**, the digital device receives a digital media file that may be associated with the calendar event. Typically, the digital device will either receive the digital file from an internal digital device, such as a camera, video recorder or the like, or receive the digital file from a secondary digital device, such as a digital camera, digital camcorder or the like, that is in digital communication with the digital device. For example, a mobile telephone equipped with a camera may communicate with another remote mobile telephone, PDA, PC or the like, and transfer the images from the camera to the remote device. Or, for example, a mobile telephone may communicate with an external digital camera via short-range communication means, and first transfer the images from the camera to the mobile telephone and subsequently to another digital device. In addition, it is possible for the digital device to receive the digital files by memory transfer via portable memory devices. The received digital media file will have metadata information associated with the file that identifies the file and provides for a timestamp and other information. The metadata will typically be automatically created at the time the media file is created or manually inputted at or near the time the media file is created or received.

At step **620**, the digital media file, and specifically the metadata information associated with the media file is correlated with metadata information in a calendared event or reminder. Typically, correlation will entail comparing the event date and time in the media file metadata with event date and time in the calendar event information file. Alternately, correlation may be conducted by comparing the calendar event name with corresponding media file metadata or any other similar parameters may be compared for the purpose of correlating.

At step **630**, once the media file is correlated with a calendar event, an accessible media file representation and at least a portion of the correlated information is created and stored and the media file is represented in the media view of a media diary. The accessible media file representation will typically be an image from the image or video file or a portion of the text from a text file, or alternatively an icon or a thumbnail image. The accessible media file representation may also include a title of the media file and text describing the media file. The title and text are typically from correlated metadata information or, alternatively, manually inputted or edited. The portion of the correlated information is typically the event title or other event identifying information, typically from metadata information or, alternatively, manually added or edited.

Figure 8 depicts a flow diagram of another aspect of a method for digital media file management in a digital device, in accordance with an embodiment of the present invention. At step **700**, a digital device receives a digital media file having metadata associated with the digital media file. Typically, the digital device will either receive the digital file from an internal digital device, such as a camera, video recorder or the like, or receive the digital file from secondary digital device that is in digital communication with. For example, a mobile telephone equipped with a camera may communicate with another remote mobile telephone or PDA and transfer the images from the camera to the remote device. For example, a mobile telephone communicating with an external camera may transfer the images from the camera to the remote device. In addition, it is possible for the digital device to receive the digital files by memory transfer via portable memory devices. The received digital media file will have metadata information associated with the file that identifies the file and provides for a timestamp. The metadata will typically be automatically created at the time of recordation or manually inputted by the data recorder. Alternatively, all or part of the metadata information may be manually inputted at file creation or upon receipt of the file by the media diary application.

At step **710,** the digital device will transmit the file, automatically, to a media diary application that associates the digital media file with a moment of time or a period of time based on the metadata correlation between the media file and the metadata in a calendar application. By providing for automatic transmission of a received media file to the media diary, the user of the digital device does have to manually input the media file into the diary. At step **720,** the user of the digital device is provided access to the digital media file via a media view that displays a representation of the digital media file in connection with a moment or a period of time. Optionally, the user may be provided access to the digital media file via a timeline view that combines the media view and a calendar view of calendared events.

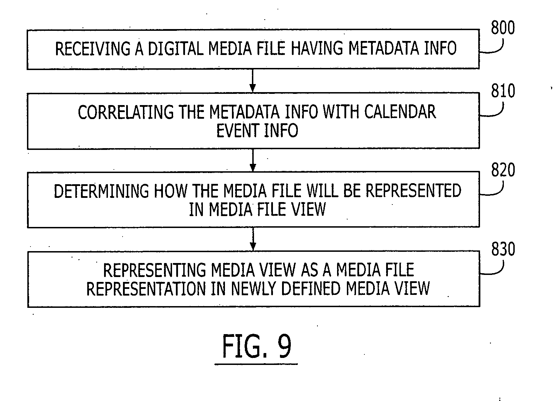

The invention may also be defined by a method for displaying media file representations in a media diary, in accordance with another aspect of the invention, as shown in Figure 9. At step **800**, a digital device receives a digital media file having metadata information. As previously noted, the digital file will typically be received from internal sources or from other devices in network communication with the device. The metadata information may be automatically inserted into the file at the time of recordation and/or it may be manually inserted by the device user. At step **810**, a correlation process determines if the metadata information corresponds to calendar event metadata information, and, if so, metadata information may be combined and added to the media file. At step **820**, a determination is made as to how the media file will be represented in a media view. This will entail determination of at least one parameter chosen from the group consisting of, size of the icon, image or thumbnail representing the media file, size of the title or text describing the media file, size of the date column, size of the media file, size of the timeline view and resolution of the display. At step **830**, media file is represented as a media file representation in the newly defined timeline view.

The described embodiments of the present invention provide for a media file management application for a digital device that will incorporate both a daily planner and storage of media files according to an associated moment or period of time, such as a date. The media file management application may also incorporate a presentation application. The media file management application may also additionally incorporate an email application or any other messaging application. The media file management application is capable of automatically entering received media files into the application and automatically associating the media file with a specific moment or period of time, such as a date or event. The invention provides efficiency to the user, in that, the media view and the timeline view combine to provide an application that is highly searchable for the purpose of making the media files readily accessed by the user. In addition, the media file management application provides the capability to easily further disseminate the media files to other digital communication devices. In addition, the media file management application provides the capability to easily represent the media files to the user.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An application for providing access to media files on a digital device, the application comprising a computer readable storage medium having computer-readable program instructions embodied in the medium, the computer-readable program instructions comprising:
first instructions for generating a media view that provides access to at least one digital media file and associates the at least one digital media files with a period of time; and
second instructions for generating a timeline view that is presented in combination with the media view and provides access to the at least one digital media file according to periods of time defined in the timeline.

2. The application of Claim 1, wherein the first instructions for generating the media view further associates the at least one digital media file with event information.

3. The application of Claim 2, wherein the second instructions for generating the timeline view further provides access to the at least one digital media file according to events in the timeline.

4. The application of Claim 1, wherein the first instructions associates the least one digital media file with a period of time that is defined by metadata associated with the at least one digital media file.

5. The application of Claim 1, wherein the first instructions further includes instructions for generating title information for the at least one digital media file, wherein the title information is defined by at least a portion of metadata associated with the at least one media file.

6. The application of Claim 1, wherein the first instructions further includes instructions for generating group title information for a plurality of digital media files, wherein the group title information is defined by at least a portion of metadata associated with the plurality of digital media files.

7. The application of Claim 1, wherein the second instructions for generating the timeline view further provides for instructions for generating a scrollable timeline that provides for locating periods of time by scrolling the timeline.

8. The application of Claim 1, wherein the first instructions for generating the media view further provides for instructions for generating a scrollable media view for locating media files by scrolling the media view.

9. The application of Claim 1, wherein the first instructions for generating the media view and the second instructions for generating a timeline view further provide for instructions for generating a scrollable media view and a scrollable timeline view that provide for locating one or more media files by scrolling.

10. The application of Claim 1, wherein the second instructions for generating a timeline view further provides for instructions for generating a timeline in the form of a time bar.

11. The application of Claim 1, wherein the second instructions for generating a timeline view further provides for instructions for generating a time handle that provides for the timeline to be scrolled.

12. The application of Claim 1, further comprising third instructions for searching the media view in terms of a period of time.

13. The application of Claim 1, further comprising third instructions for searching the media view in terms of any combination of metadata information.

14. The application of Claim 1, further comprising third instructions for generating a calendar view that represents time in calendar format and associates at least one calendar events with respective periods of time.

15. The application of Claim 14, wherein the first, second and third instructions are implemented concurrently to generate a media file access view that provides accessibility to the timeline view, the media view and the calendar view.

16. The application of Claim 14, wherein the third instructions and the first instructions provide for correlation of metadata associated with at least one media file and metadata associated with at least one calendar event.

17. The application of Claim 1, wherein the first instructions for generating a media view further provides for instructions for adjusting the area of the periods of time within the media view according to the amount of digital media files in the period of time.

18. The application of Claim 17, wherein the first instructions for adjusting the area of the periods of time further comprises adjusting the area of the period of time view so that all of the media files within a period of time are viewable within a display.

19. A method for digital media management in a digital device, the method comprising the steps of:
receiving, at the digital device, a digital media file having metadata associated with the digital media file;
transmitting the file to a media diary application that associates the digital media file with a period in time based on the metadata; and
providing a user access to the digital media file via a media view that displays a representation of the digital media file in connection with the period of time.

20. The method of Claim 19, further comprising the step of providing the user the ability to locate digital media files within the media view by scrolling a timeline that is displayed in conjunction with the media view.

21. The method of Claim 19, further comprising the step of providing a user the ability to locate digital media files within the media view by movement of a time handle that is displayed in conjunction with the media view.

22. The method of Claim 19, further comprising the step of correlating the metadata in the digital media file with calendar event information prior to providing user access to the media file via a media view.

23. The method of Claim 22, further comprising the step of creating an accessible and displayable representation of the digital media file and at least a portion of the correlated media file metadata and calendar event information.

24. A digital device, the device comprising:
a processing unit that executes computer-readable program instructions for accessing media files, the computer-readable program instructions comprising:
first instructions for generating a media view that provides access to at least one digital media file and associates the at least one digital media files with a period of time,
second instructions for generating a timeline view that is presented in combination with the media view and provides access to the at least one digital media file according to periods of time defined in the timeline; and
a display in communication with the processing unit that presents the media view and the timeline view.

25. The device of Claim 24, wherein the computer-readable program instructions further include third instructions for generating a calendar view that represents time in calendar format and associates one or more events with respective periods of time.

26. The device of Claim 25, wherein the display further provides for presenting a composite view that includes the timeline view in relation to the media view and the calendar view.

27. The device of Claim 24, wherein the computer-readable program instructions further include third instructions for searching the media view.

28. The device of Claim 24, wherein the computer-readable program instructions further include third instructions for searching one of the media view and the calendar view.

29. The device of Claim 25, wherein the third instructions and the first instructions provide for correlation of metadata associated with at least one media file and metadata associated with at least one calendar event.

30. The device of Claim 29, wherein the correlation of metadata associated with at least one media file and metadata associated with at least one calendar event further combines the metadata associated with at least one media file and the metadata associated with at least one calendar event if a match between the at least one media file and the at least one calendar event is determined.
